Europäisches Patentamt

European Patent Office

Office européen des brevets

(19)

(11) **EP 0 902 262 B1**

(12) **EUROPÄISCHE PATENTSCHRIFT**

(45) Veröffentlichungstag und Bekanntmachung des Hinweises auf die Patenterteilung:
**06.10.2004 Patentblatt 2004/41**

(51) Int Cl.[7]: **G01F 1/84**

(21) Anmeldenummer: **98113870.4**

(22) Anmeldetag: **24.07.1998**

(54) **Verfahren zur Bestimmung des Massendurchflusses nach dem Coriolis-Prinzip**

Mass flow rate detection method according to the Coriolis principle

Procédé de détection du débit massique selon le principe Coriolis

(84) Benannte Vertragsstaaten:
**CH DE DK FR GB LI NL SE**

(30) Priorität: **29.07.1997 DE 19732605**

(43) Veröffentlichungstag der Anmeldung:
**17.03.1999 Patentblatt 1999/11**

(73) Patentinhaber: **Krohne AG**
**4019 Basel (CH)**

(72) Erfinder: **Hussain, Yousif A. Dr.**
**Northampton, NN3 3DA (GB)**

(74) Vertreter: **Gesthuysen, von Rohr & Eggert**
**Patentanwälte**
**Postfach 10 13 54**
**45013 Essen (DE)**

(56) Entgegenhaltungen:
**EP-A- 0 702 212          US-A- 5 469 748**

**Beschreibung**

Die Erfindung betrifft ein Verfahren zur Bestimmung des Massendurchflusses nach dem Coriolis-Prinzip, bei welchem mit Hilfe mindestens zweier Meßwertaufnehmer mindestens zwei die Bewegungen einer Coriolis-Leitung wiedergebende Meßsignale erzeugt werden, bei welchem die Meßsignale mit Hilfe mindestens dreier parallel geschalteter Eingangsstufen bearbeitet werden, bei welchem die Phasendifferenzen zwischen den bearbeiteten Meßsignalen mit Hilfe mindestens zweier Phasendetektoren bestimmt werden, bei welchem die Meßsignale zumindest teilweise mit Hilfe mindestens eines ersten Meßstellenumschalters auf die Eingänge der Eingangsstufen geschaltet werden, bei welchem aus den Phasendifferenzen zwischen den bearbeiteten Meßsignalen von einer Korrekturschaltung eine korrigierte Phasendifferenz zwischen den Meßsignalen bestimmt wird und bei welchem mit Hilfe einer Auswerteeinheit aus der korrigierten Phasendifferenz der Massendurchfluß bestimmt wird.

Das dem erfindungsgemäßen Verfahren zur Bestimmung des Massendurchflusses nach dem Coriolis-Prinzip zugrundeliegende Verfahren zur Bestimmung der Phasendifferenz zwischen zwei Meßsignalen ist auch in Verbindung mit anderen Meßverfahren einsetzbar, bei denen die Bestimmung der Phasendifferenz zwischen zwei Meßsignalen eine Rolle spielt.

Grundsätzlich befaßt sich die vorliegende Erfindung mit der Verbesserung des Verfahrens zur Signalauswertung bei Coriolis-Massendurchflußmeßgeräten. Diese Coriolis-Massendurchflußmeßgeräte liefern als Meßsignale zwei periodische Spannungen, die eine dem Massendurchfluß proportionale Phasenverschiebung aufweisen. Entscheidend für die Meßgenauigkeit der Massendurchflußmeßgeräte ist also die Bestimmung der Phasendifferenz. Die im Industriebereich gängigen Anforderungen an die Meßgenauigkeit erfordern eine Auflösung der Phasendifferenz von ungefähr $4 \cdot 10^{-5}$ Grad, wobei diese Anforderungen ständig steigen. Ein wesentliches Problem bei der Erfüllung dieser Anforderungen sind die im analogen Teil der Auswerteschaltung insbesondere in den Eingangsstufe aber auch in den Zuleitungen zwischen Meßwertaufnehmer und Eingangsstufen auftretenden temperaturabhängigen Phasenverschiebungen. Ein Verfahren, welches die Korrektur dieser Phasenverschiebungen gewährleistet, ist beispielsweise aus der US 4,817,448 A bekannt. Bei diesem Verfahren werden die Meßsignale mit Hilfe einer Umpolungsschaltung regelmäßig zwischen den Eingangsstufen verpolt. Ohne Temperatureinflüsse liefert dann der Phasendetektor jeweils exakt inverse Werte. Durch unterschiedliche Temperatureinflüsse auf die Eingangsstufen treten jedoch tatsächlich unterschiedliche Phasenverschiebungen auf, die dazu führen, daß die vom Phasendetektor bei Umpolung gelieferten Phasendifferenzen nicht mehr exakt invers zueinander sind. Aus dieser Abweichung der Phasendifferenzen wird nun ein Nullpunktkorrektursignal abgeleitet, mit dessen Hilfe die ermittelten Phasendifferenzen korrigiert werden, so daß die Anforderungen an die Meßgenauigkeit für die Phasendifferenz erfüllt werden.

Bei diesem aus dem Stand der Technik bekannten Verfahren zur Bestimmung des Massendurchflusses nach dem Coriolis-Prinzip ist problematisch, daß bei der Umpolung Transienten entstehen, die für einen nicht unerheblichen Zeitraum die Auswertung der Meßergebnisse des Phasendetektors nicht zulassen. Dies ist insbesondere dann problematisch, wenn die Meßwerte für den Massendurchfluß zur Steuerung von Regelkreisen eingesetzt werden, da in diesem Fall in bestimmten Zeiträumen der Ist-Wert der Regelgröße nicht ermittelt werden kann.

Ein weiteres Verfahren zur Bestimmung des Massendurchflusses nach dem Coriolis-Prinzip, von dem die Erfindung ausgeht, ist beispielsweise aus der EP 0 593 623 B 1 bekannt. Bei diesem bekannten Verfahren werden das erste und das zweite Eingangssignal über den ersten Meßstellenumschalter wechselweise auf die Eingänge der ersten und zweiten Eingangsstufen geschaltet. Auf den Eingang der dritten Eingangsstufe bleibt kontinuierlich eines der beiden Meßsignale geschaltet. Zur Verwirklichung des bekannten Verfahrens liegen die bearbeiteten Meßsignale der ersten Eingangsstufe und der dritten Eingangsstufe kontinuierlich an einem ersten Phasendetektor an, während die bearbeiteten Meßsignale der zweiten Eingangsstufe und der dritten Eingangsstufe kontinuierlich an einem zweiten Phasendetektor anliegen. Ist beispielsweise das zweite Meßsignal dauerhaft auf den Eingang der dritten Eingangsstufe geschaltet, so muß dafür Sorge getragen werden, daß auf einen der Eingänge der ersten oder zweiten Eingangsstufe immer das erste Meßsignal geschaltet ist. Auf den Eingang der verbleibenden Eingangsstufe wird bei dem bekannten Verfahren zeitweise das zweite Meßsignal geschaltet, so daß das von der dritten Eingangsstufe bearbeitete zweite Meßsignal und das von der verbleibenden Eingangsstufe bearbeitete Meßsignal an einem der Phasendetektoren anliegen, so daß mit Hilfe dieses Phasendetektors die Differenz der in den jeweiligen Eingangsstufen temperaturabhängig auftretenden Phasenverschiebungen bestimmt wird. An dem verbleibenden Phasendetektor liegen demgegenüber das von einer Eingangsstufe bearbeitete erste Meßsignal und das von der dritten Eingangsstufe bearbeitete zweite Meßsignal an, so daß dieser Phasendetektor die unkorrigierte Phasendifferenz zwischen dem ersten und dem zweiten Meßsignal bestimmt. Ausgehend von diesem Zustand wird bei dem bekannten Verfahren nun das erste Meßsignal auch auf den Eingang der verbleibenden Eingangsstufe geschaltet, so daß für eine Übergangsphase beide Phasendetektoren die unkorrigierte Phasendifferenz zwischen den beiden Meßsignalen liefern. Nachdem die in der Übergangsphase auftretenden Transienten bei der Bestimmung der Phasendifferenzen abgeklungen sind, wird nun bei dem bekannten Verfahren das zweite Meßsignal auf den Eingang der einen Eingangsstufe geschaltet, so daß nunmehr der Phasendetektor, der zunächst eine unkorrigierter Phasendifferenz zwischen den beiden Meßsignalen lieferte, die Differenz zwischen den temperaturabhängig in der einen Eingangsstufe und der dritten Eingangsstufe entstehenden Phasenverschiebungen bestimmt. Da somit bei dem bekannten Verfahren, von dem die Erfindung ausgeht, die Differenzen der Phasenverschiebungen zwischen der ersten und der dritten Eingangsstufe und der zweiten und der dritten Eingangsstufe gemessen werden, kann mit Hilfe der gespeicherten jeweiligen Differenzen der Phasenverschiebungen die jeweilige am ersten oder zweiten Phasendetektor anliegende unkorrigierte Phasendifferenz zwischen dem ersten und dem zweiten Meßsignal korrigiert werden.

Das bekannte Verfahren, von dem die Erfindung ausgeht, liefert also ein Meßergebnis für die Phasendifferenz zwischen zwei Meßsignalen, welches im Hinblick auf die temperaturabhängig in den Eingangsstufen auftretenden Phasenverschiebungen korrigiert ist. Gleichzeitig steht das Meßsignal für die Phasendifferenz kontinuierlich zur Verfügung, da beim Umschalten der Meßsignale von einer Eingangsstufe auf eine andere Eingangsstufe mit Hilfe des Meßstellenumschalters erst das Abklingen der hierbei auftretenden Transienten abgewartet werden kann, bevor statt dem Ausgangssignal des einen Phasendetektors das Ausgangssignal des anderen Phasendetektors als Meßergebnis für die unkorrigierte Phasendifferenz zwischen dem ersten und zweiten Meßsignal verwendet wird.

Bei dem bekannten Verfahren zur Bestimmung des Massendurchflusses nach dem Coriolis-Prinzip, von dem die Erfindung ausgeht, ist problematisch, daß in dem besonders störempfindlichen Bereich vor den Eingangsstufen die Meßsignale mit einem relativ komplizierten Meßstellenumschalter auf die Eingänge der Eingangsstufen geschaltet werden. Hierbei läßt sich ein Übersprechen der Meßsignale nicht vollständig ausschließen. Darüber hinaus ist es bei dem bekannten Verfahren nicht möglich, die Phasendetektoren angepaßt an unterschiedliche Anforderungen auszugestalten, da beide Phasendetektoren wechselweise zur Bestimmung der unkorrigierten Phasendifferenz und einer Korrekturphasendifferenz eingesetzt werden.

Der Erfindung liegt also die Aufgabe zugrunde, das bekannte Verfahren zur Bestimmung des Massendurchflusses nach dem Coriolis-Prinzip dahingehend zu verbessern, daß die Meßgenauigkeit erhöht wird und gleichzeitig der elektronische Aufwand reduziert wird.

Die zuvor hergeleitete und aufgezeigte Aufgabe ist erfindungsgemäß dadurch gelöst, daß mit Hilfe des ersten Phasendetektors kontinuierlich eine unkorrigierte Phasendifferenz zwischen dem mit Hilfe der ersten Eingangsstufe bearbeiteten ersten Meßsignal und dem mit Hilfe der zweiten Eingangsstufe bearbeiteten zweiten Meßsignal bestimmt wird, daß zumindest zeitweise eine erste Korrekturphasendifferenz zwischen dem mit Hilfe der ersten Eingangsstufe bearbeiteten ersten Meßsignal und dem mit Hilfe der dritten Eingangsstufe bearbeiteten ersten Meßsignal und im Wechsel eine zweite Korrekturphasendifferenz zwischen dem mit Hilfe der zweiten Eingangsstufe bearbeiteten zweiten Meßsignal und dem mit Hilfe der dritten Eingangsstufe bearbeiteten zweiten Meßsignal bestimmt wird und daß mit Hilfe der Korrekturschaltung die korrigierte Phasendifferenz zwischen den Meßsignalen aus der Summe von unkorrigierter Phasendifferenz und Differenz zwischen der ersten und der zweiten Korrekturphasendifferenz bestimmt wird.

Erfindungsgemäß ist gewährleistet, daß die Meßsignale vor den Eingangsstufen nur mit Hilfe eines einfachen Meßstellenumschalters abwechselnd an den Eingang der dritten Eingangsstufe gelegt werden müssen. Hierdurch verringert sich der elektronische Aufwand in dem im Hinblick auf die Meßgenauigkeit besonders empfindlichen Teil vor den Eingangsstufen. Darüber hinaus wird bei dem erfindungsgemäß ausgestalteten Verfahren die unkorrigierte Phasendifferenz von dem ersten Phasendetektor und die Korrekturphasendifferenzen von mindestens einem zweiten Phasendetektor bestimmt. Entsprechend können diese Phasendetektoren an die sich jeweils stellenden Anforderungen optimal angepaßt werden.

Eine besonders einfache Verwirklichung des erfindungsgemäßen Verfahrens ist dann gewährleistet, wenn die bearbeiteten Meßsignale mit Hilfe eines zweiten Meßstellenumschalters auf die Eingänge des zweiten Phasendetektors geschaltet werden und wenn mit Hilfe des zweiten Phasendetektors die erste und zweite Korrekturphasendifferenz bestimmt wird. Alternativ ist auch denkbar, jedoch aufwendiger, mit Hilfe des zweiten Phasendetektors ausschließlich die erste Korrekturphasendifferenz zu bestimmen und mit Hilfe eines dritten Phasendetektors die zweite Korrekturphasendifferenz zu bestimmen.

Werden nun die bearbeiteten Meßsignale vor der Bestimmung der Phasendifferenzen digitalisiert, so sind weitere Einflüsse von temperaturabhängigen Bauteilen weitestgehend reduziert, da die digitale Bestimmung der Phasendifferenzen völlig unabhängig von Temperatureinflüssen ist.

Für den beschriebenen Fall, daß die bearbeiteten Meßsignale vor der Bestimmung der Phasendifferenzen digitalisiert werden, müssen selbstverständlich die Phasendetektoren digital ausgebildet werden. Hierbei bietet es sich an, die Bestimmung der Phasendifferenzen anhand der fouriertransformierten bearbeiteten Meßsignale vorzunehmen, wie dies beispielsweise in der EP 0 282 552 B 1 beschrieben ist.

Bei der Abtastung der bearbeiteten Meßsignale besteht die Möglichkeit, diese Abtastungen synchron oder asynchron durchzuführen. Hierbei hat die asynchrone Abtastung den Vorteil, daß die Anzahl der benötigten Analog/Digital-Wandler reduzierbar ist, womit natürlich verbunden ist, daß die Anforderungen an die Geschwindigkeit der eingesetzten Analog/Digital-Wandler steigen.

Da die Temperatureinflüsse auf die Phasenverschiebungen innerhalb der Eingangsstufen eine realtiv hohe Zeitkonstante aufweisen, ist es vorteilhaft, die Ermittlung der Korrekturphasendifferenzen regelmäßig zu unterbrechen, wobei während dieser Unterbrechungen ohne Genauigkeitsverluste die gespeicherten Korrekturphasendifferenzen zur Korrektur herangezogen werden können und die frei werdenden Kapazitäten des Analog/Digital-Wandlers zur Digitalisierung anderer Meßgrößen, wie z. B. der Temperaturen der Coriolis-Leitung, nutzbar sind.

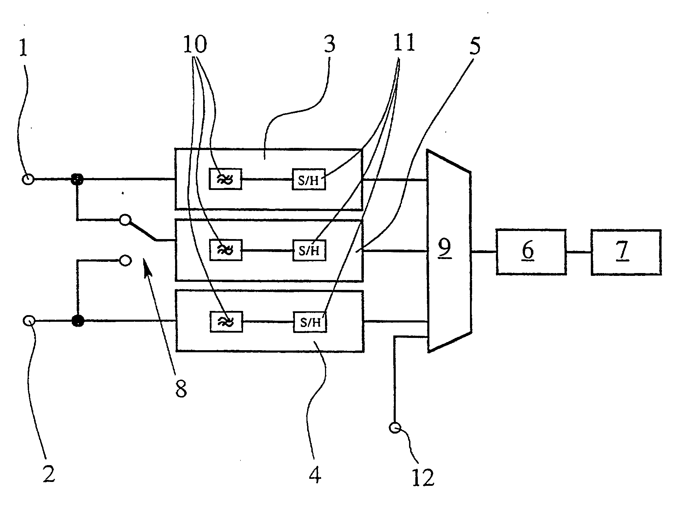

Im einzelnen gibt es verschiedene Möglichkeiten, daß erfindungsgemäße Verfahren zur Bestimmung des Massendurchflusses nach dem Coriolis-Prinzip auszugestalten und weiterzubilden. Dazu wird verwiesen einerseits auf die den Patentansprüchen 1 und 2 nachgeordneten Patentansprüche, andererseits auf die Beschreibung eines bevorzugten Ausführungsbeispiels in Verbindung mit der Zeichnung. In der Zeichnung zeigt die einzige Figur ein Ausführungsbeispiel einer Vorrichtung zur Verwirklichung des erfindungsgemäßen Verfahrens.

In dem in der einzigen Figur dargestellten Ausführungsbeispiel einer Vorrichtung zur Verwirklichung des erfindungsgemäßen Verfahrens liegen an zwei Eingangskontakten 1, 2 zwei die Bewegung einer Coriolis-Leitung wiedergebende Meßsignale an, die mit Hilfe zweier nicht dargestellter Meßwertaufnehmer erzeugt werden. Die beiden Meßsignale werden bei dem dargestellten Ausführungsbeispiel mit Hilfe dreier parallel geschalteter Eingangsstufen 3, 4, 5 bearbeitet. Die die Phasendifferenzen zwischen den bearbeiteten Meßsignalen bestimmenden Phasendetektoren sind bei dem dargestellten Ausführungsbeispiel in einem einem Analog/Digital-Wandler 6 nachgeschalteten digitalen Auswertesystem 7 realisiert. Zur wechselweisen Schaltung der Meßsignale auf den Eingang der dritten Eingangsstufe 5 ist ein einfacher Meßstellenumschalter 8 vorgesehen, der als Wechselschalter ausgebildet ist, mit dessen Eingängen die Eingangskontakte 1 und 2 verbunden sind und mit dessen Ausgang der Eingang der dritten Eingangsstufe 5 verbunden ist. Die die aus den Phasendifferenzen zwischen den bearbeiteten Meßsignalen bestimmte korrigierte Phasendifferenz zwischen den Meßsignalen ermittelnde Korrekturschaltung ist ebenso wie die aus der korrigierten Phasendifferenz den Massendurchfluß bestimmende Auswerteeinheit bei dem dargestellten Ausführungsbeispiel im Auswertesystem 7 verwirklicht.

Bei dem dargestellten Ausführungsbeispiel werden die bearbeiteten Meßsignale, wie bereits erwähnt, vor der Bestimmung der Phasendifferenzen von einem Analog/Digital-Wandler 6 digitalisiert. Die Abtastung der Meßsignale erfolgt bei dem dargestellten Ausführungsbeispiel asynchron, wozu hier ein Abtastmeßstellenumschalter 9 vorgesehen ist. Dieser Abtastmeßstellenumschalter legt die von den Eingangsstufen 3, 4, 5 bearbeiteten Meßsignale in beliebiger Reihenfolge an den Eingang des Analog/Digital-Wandlers 6. Zur analogen Vorbehandlung weisen die Eingangsstufen 3, 4, 5 jeweils einen Tiefpaßfilter 10 und ein Abtast/Halte-Glied 11 auf. Weiter liegt an dem Abtastmeßstellenumschalter 9 über einen Eingangskontakt 12 ein weiteres Meßsignal, beispielsweise das Meßsignal eines Temperatursensors an. Da zur Bestimmung der Korrekturphasendifferenzen pro Zeiteinheit nicht so viele Stützstellen für das von der dritten Eingangsstufe 5 bearbeitete Eingangssignal zur digitalen Phasendifferenzbestimmung notwendig sind, wird bei dem dargestellten Ausführungsbeispiel die frei werdende Kapazität des Analog/Digital-Wandlers 6 zur Wandlung der Meßsignale beispielsweise des Temperatursensors genutzt.

Erfindungsgemäß wird bei dem dargestellten Ausführungsbeispiel eine unkorrigierte Phasendifferenz zwischen dem mit Hilfe der ersten Eingangsstufe 3 bearbeiteten ersten Meßsignal und dem mit Hilfe der zweiten Eingangsstufe 4 bearbeiteten zweiten Meßsignal mit Hilfe des in dem Auswertesystem 7 realisierten ersten Phasendetektor bestimmt. Weiter wird erfindungsgemäß , vorzugsweise mit einer geringeren Anzahl von Stützstellen, eine erste Korrekturphasendifferenz zwischen dem mit Hilfe der ersten Eingangsstufe 3 bearbeiteten ersten Meßsignal und dem mit Hilfe der dritten Eingangsstufe 5 bearbeiteten ersten Meßsignal und im Wechsel eine zweite Korrekturphasendifferenz zwischen dem mit Hilfe der zweiten Eingangsstufe 4 bearbeiteten zweiten Meßsignal und dem mit Hilfe der dritten Eingangsstufe 5 bearbeiteten zweiten Meßsignal bestimmt.

Es gilt nun offensichtlich:

$$\Phi_1 = \Phi_S + \Phi_A - \Phi_B$$

mit

$\Phi_1 =$ unkorrigierte Phasendifferenz

$\Phi_S =$ korrigierte Phasendifferenz

$\Phi_A =$ Phasenverschiebung in der ersten Eingangsstufe 3

$\Phi_B =$ Phasenverschiebung in der zweiten Eingangsstufe 4.

Weiter gilt auch:

$$\Phi_2 = \Phi_A - \Phi_C$$

und

$$\Phi_3 = \Phi_B - \Phi_C$$

mit

$\Phi_2 =$      erste Korrekturphasendifferenz
$\Phi_3 =$      zweite Korrekturphasendifferenz.

Hieraus folgt insgesamt:

$$\Phi_1 - \Phi_2 + \Phi_3 = \Phi_S + \Phi_A - \Phi_B - (\Phi_A - \Phi_C) + (\Phi_B - \Phi_C)$$

$$= \Phi_S$$

Dies bedeutet im Klartext, daß die Einflüsse der Phasenverschiebungen innerhalb der Eingangsstufen dadurch eliminiert werden, daß die korrigierte Phasendifferenz zwischen den Meßsignalen aus der Summe von unkorrigierter Phasendifferenz und Differenz zwischen der ersten und der zweiten Korrekturphasendifferenz bestimmt wird.

## Patentansprüche

1. Verfahren zur Bestimmung des Massendurchflusses nach dem Coriolis-Prinzip, bei welchem mit Hilfe mindestens zweier Meßwertaufnehmer mindestens zwei die Bewegungen einer Coriolis-Leitung wiedergebende Meßsignale erzeugt werden, bei welchem die Meßsignale mit Hilfe mindestens dreier parallel geschalteter Eingangsstufen bearbeitet werden, bei welchem die Phasendifferenzen zwischen den bearbeiteten Meßsignalen mit Hilfe mindestens zweier Phasendetektoren bestimmt werden, bei welchem die Meßsignale zumindest teilweise mit Hilfe mindestens eines ersten Meßstellenumschalters auf die Eingänge der Eingangsstufen geschaltet werden, bei welchem aus den Phasendifferenzen zwischen den bearbeiteten Meßsignalen von einer Korrekturschaltung eine korrigierte Phasendifferenz zwischen den Meßsignalen bestimmt wird und bei welchem mit Hilfe einer Auswerteeinheit aus der korrigierten Phasendifferenz der Massendurchfluß bestimmt wird, **dadurch gekennzeichnet, daß** mit Hilfe des ersten Phasendetektors kontinuierlich eine unkorrigierte Phasendifferenz zwischen dem mit Hilfe der ersten Eingangsstufe bearbeiteten ersten Meßsignal und dem mit Hilfe der zweiten Eingangsstufe bearbeiteten zweiten Meßsignal bestimmt wird, das zumindest zeitweise eine erste Korrekturphasendifferenz zwischen dem mit Hilfe der ersten Eingangsstufe bearbeiteten ersten Meßsignal und dem mit Hilfe der dritten Eingangsstufe bearbeiteten ersten Meßsignal und im Wechsel eine zweite Korrekturphasendifferenz zwischen dem mit Hilfe der zweiten Eingangsstufe bearbeiteten zweiten Meßsignal und dem mit Hilfe der dritten Eingangsstufe bearbeiteten zweiten Meßsignal bestimmt wird und daß mit Hilfe der Korrekturschaltung die korrigierte Phasendifferenz zwischen den Meßsignalen aus der Summe von unkorrigierter Phasendifferenz und Differenz zwischen der ersten und zweiten Korrekturphasendifferenz bestimmt wird.

2. Verfahren zur Bestimmung der Phasendifferenz zwischen zwei Meßsignalen, bei welchem die Meßsignale mit Hilfe mindestens dreier parallel geschalteter Eingangsstufen barbeitet werden, bei welchem die Phasendifferenzen zwischen den bearbeiteten Meßsignalen mit Hilfe mindestens zweier Phasendetektoren bestimmt werden, bei welchem die Meßsignale zumindest teilweise mit Hilfe mindestens eines ersten Meßstellenumschalters auf die Eingänge der Eingangsstufen geschaltet werden und bei welchem aus den Phasendifferenzen zwischen den bearbeiteten Meßsignalen von einer Korrekturschaltung eine korrigierte Phasendifferenz zwischen den Meßsignalen bestimmt wird, **dadurch gekennzeichnet, daß** mit Hilfe des ersten Phasendetektors kontinuierlich eine unkorrigierte Phasendifferenz zwischen dem mit Hilfe der ersten Eingangsstufe bearbeiteten ersten Meßsignal und dem mit Hilfe der zweiten Eingangsstufe bearbeiteten zweiten Meßsignal bestimmt wird, das zumindest zeitweise eine erste Korrekturphasendifferenz zwischen dem mit Hilfe der ersten Eingangsstufe bearbeiteten ersten Meßsignal und dem mit Hilfe der dritten Eingangsstufe bearbeiteten ersten Meßsignal und im Wechsel eine zweite Korrekturphasendifferenz zwischen dem mit Hilfe der zweiten Eingangsstufe bearbeiteten zweiten Meßsignal und dem mit Hilfe der dritten Eingangsstufe bearbeiteten zweiten Meßsignal bestimmt wird und daß mit Hilfe der Korrekturschaltung die korrigierte Phasendifferenz zwischen den Meßsignalen aus der Summe von unkorrigierter Phasendifferenz und Differenz zwischen der ersten und zweiten Korrekturphasendifferenz bestimmt wird.

3. Verfahren nach Anspruch 1 oder 2, **dadurch gekennzeichnet, daß** die bearbeiteten Meßsignale mit Hilfe eines zweiten Meßstellenumschalters auf die Eingänge des zweiten Phasendetektors geschaltet werden und daß mit Hilfe des zweiten Phasendetektors die erste und zweite Korrekturphasendifferenz bestimmt wird.

4. Verfahren nach einem der Ansprüche 1 bis 3, **dadurch gekennzeichnet, daß** die bearbeiteten Meßsignale vor der Bestimmung der Phasendifferenzen digitalisiert werden.

5. Verfahren nach Anspruch 4, **dadurch gekennzeichnet, daß** in Unterbrechungen der Digitalisierung von bearbeiteten Meßsignalen zur Bestimmung der Korrekturphasendifferenzen andere Meßgrößen, z. B. Temperaturen, digitalisiert werden.

**Claims**

1. A method for determining the mass flow rate based on the Coriolis principle, whereby, with the aid of at least two process-variable detectors, at least two data signals reflecting the movements of a Coriolis line are generated, said data signals are processed with the aid of at least three parallel input stages, the phase differences between the processed data signals are determined with the aid of at least two phase detectors, the data signals are, at least in part, fed to the input contacts of the input stages with the aid of at least one first check switch, a correcting circuit derives from the phase differences between said data signals a corrected phase difference between the data signals and with the aid of an evaluation unit, the mass-flow rate being established on the basis of the corrected phase difference, **characterized in that** the first phase detector serves to continuously measure an uncorrected phase difference between the first data signal processed with the aid of the first input stage and the second data signal processed with the aid of the second input stage, that at least periodically a first corrective phase difference between the first data signal processed by means of the first input stage and the first data signal processed by means of the third input stage and, alternately, a second corrective phase difference between the second data signal processed by the second input stage and the second data signal processed by the third input stage are measured, and that with the help of the correcting circuitry, the corrected phase difference between the data signals from the sum of the uncorrected phase difference and the difference between the first and second corrective phase differences are determined.

2. A method for determining the phase difference between two data signals, whereby said data signals are processed with the aid of at least three parallel input stages, the phase differences between the data signals are measured by means of at least two phase detectors, the data signal are at least in part fed to the input contacts of the input stages with the aid of at least one first check switch, and a correcting circuit derives from the phase differences between the processed data signals a corrected phase difference between the data signals, **characterized in that** the first phase detector serves to continuously measure an uncorrected phase difference between the first data signal processed by means for the first input stage and the second data signal processed by the second input stage, that at least periodically a first corrective phase difference between the first data signal processed by the first input stage and the first data signal processed by the third input stage and, alternately, a second corrective phase difference between the second data signal processed by the second input stage and the second data signal processed by the third input stage, are measured, and that the correcting circuitry serves to determine the corrected phase difference between the data signals from the sum of the uncorrected phase difference and the difference between the first and second corrective phase differences.

3. The method according to claim 1 or 2, **characterized in that** by means of a second check switch, the processed data signals are fed to the inputs of a second phase detector and that with the aid of the second phase detector, the first and second corrective phase differences are determined.

4. The method according to any one of claims 1 to 3, **characterized in that** prior to the determination of the phase differences, the processed data signals are digitized.

5. The method according to claim 4, **characterized in that** during interruptions of the digitizing of the processed data signals for determining the corrective phase differences, other process variables, for instance temperatures, are digitized.

**Revendications**

1. Procédé de détermination du débit massique suivant le principe de Coriolis, dans lequel, à l'aide d'au moins deux capteurs de valeurs de mesure, sont générés au moins deux signaux de mesure représentant les mouvements d'un conducteur de Coriolis, dans lequel les signaux de mesure sont traités à l'aide d'au moins trois niveaux d'entrée branchés parallèlement, dans lequel les différences de phase entre les signaux de mesure traités sont déterminées à l'aide d'au moins deux détecteurs de phase, dans lequel les signaux de mesure sont commutés du moins partiellement à l'aide d'au moins un premier commutateur de points de mesure sur les entrées des niveaux d'entrée, dans lequel, à partir des différences de phase entre les signaux de mesure traités, une différence de phase corrigée entre les signaux de mesure est déterminée par un circuit de correction et dans lequel, à l'aide d'une unité d'exploitation, le débit massique est déterminé à partir de la différence de phase corrigée, **caractérisé en ce qu'**une différence de phase non corrigée est déterminée en continu à l'aide du premier détecteur de phase entre le premier signal de mesure traité à l'aide du premier niveau d'entrée et le deuxième signal de mesure traité à l'aide du deuxième niveau d'entrée, qu'une première différence de phase est déterminée au moins temporairement entre le premier signal de mesure traité à l'aide du premier niveau d'entrée et le premier signal de mesure traité à l'aide du troisième niveau d'entrée et qu'alternativement une deuxième différence de phase de correction entre le deuxième signal de mesure traité à l'aide du deuxième niveau d'entrée et le deuxième signal de mesure traité à l'aide du troisième niveau d'entrée est déterminée et que la différence de phase corrigée à l'aide du circuit de correction entre les signaux de mesure est déterminée à partir de la somme de la différence de phase non corrigée et de la différence entre la première et la deuxième différence de phase de correction.

2. Procédé de détermination de la différence de phase entre deux signaux de mesure, dans lequel les signaux de mesure sont traités à l'aide d'au moins trois niveaux d'entrée branchés parallèlement, dans lequel les différences de phases entre les signaux de mesure traités sont déterminées à l'aide d'au moins deux détecteurs de phase, dans lequel les signaux de mesure sont commutés du moins partiellement à l'aide d'au moins un premier commutateur de points de mesure sur les entrées des niveaux d'entrée et dans lequel une différence de phase corrigée entre les signaux de mesure est déterminée à partir des différences de phase entre les signaux de mesure traités par un circuit de correction **caractérisé en ce qu'**une différence de phase non corrigée est déterminée en continu entre le premier signal de mesure traité à l'aide du premier niveau d'entrée et le deuxième signal de mesure traité à l'aide du deuxième niveau d'entrée, qu'une première différence de phase de correction est déterminée au moins temporairement entre le premier signal de mesure traité à l'aide du premier niveau d'entrée et le premier signal de mesure traité à l'aide du troisième niveau d'entrée et qu'alternativement une deuxième différence de phase de correction entre le deuxième signal de mesure traité à l'aide du deuxième niveau d'entrée et le deuxième signal de mesure traité à l'aide du troisième niveau d'entrée est déterminée et que la différence de phase corrigée entre les signaux de mesure est déterminée à l'aide du circuit de correction à partir de la somme de la différence de phase non corrigée et de la différence entre la première et la deuxième différence de phase de correction.

3. Procédé selon la revendication 1 ou 2, **caractérisé en ce que** les signaux de mesure traités sont commutés à l'aide d'un deuxième commutateur de points de mesure sur les entrées du deuxième détecteur de phase et que la première et la deuxième différence de phase de correction est déterminée à l'aide du deuxième détecteur de phase.

4. Procédé selon l'une quelconque des revendications 1 à 3, **caractérisé en ce que** les signaux de mesure traités sont numérisés avant la détermination des différences de phase.

5. Procédé selon la revendication 4, **caractérisé en ce que** d'autres grandeurs de mesure, par exemple les températures, sont numérisées au cours d'interruptions de la numérisation des signaux de mesure traités pour la détermination des différences de phase de correction.

EP 0 902 262 B1

8